# EUROPEAN PATENT SPECIFICATION

(11) **EP 3 931 465 B1**
(45) Date of publication and mention of the grant of the patent: **07.06.2023**
(21) Application number: 20710799.6
(22) Date of filing: 26.02.2020
(51) Int. Cl.: F16H 3/089, B62M 11/06, F16D 41/24, F16H 3/083

(54) **TRANSMISSIONS FOR MACHINES**
GETRIEBE FÜR MASCHINEN
TRANSMISSIONS POUR MACHINES

(30) Priority: 27.02.2019 GB 201902661
(43) Date of publication of application: 05.01.2022
(73) Proprietor: Intra Drive Ltd, Edinburgh, Lothian EH16 4BB (GB)
(72) Inventor: RAVILIOUS, Mark, Edinburgh Lothian EH16 4BB (GB)
(74) Representative: Butler, Daniel James
(86) International application number: PCT/EP2020/055073
(87) International publication number: WO 2020/174025

(56) References cited:
- EP-A2- 2 039 965
- US-A1- 2012 240 697
- US-A1- 2017 029 067

## Description

### Field of the Invention

The present invention relates to transmissions for machines, such as vehicles, and in particular, but not exclusively, multi-speed transmissions for machines. The present invention also relates to wheeled vehicles comprising such a transmission.

### Background Art

Conventional gear shift mechanisms of vehicle transmissions comprise a gear selector or gear shift that is coupled to one or more gears by way of a mechanical linkage. More recently, electromagnetic actuators have been used in gear shift mechanisms to enable gear shifting to be controlled by electrical means whereby there is no need for mechanical linkage between gear selector and the vehicle transmission.

US2012240697A1 discloses a transmission that comprises: a rotatable transmission shaft defining a shaft space therein; a gear mounted coaxially with the transmission shaft for rotation around the transmission shaft; a meshing component mounted on the transmission shaft for movement in a radial direction between a disengaged position and an engaged position, the meshing component not meshing with the gear when in the disengaged position whereby the gear is rotatable around the transmission shaft, the meshing component meshing with the gear when in the engaged position whereby the gear rotates with the transmission shaft; and a cam and an electric gear shift motor, the cam having at least one lobe extending therefrom in the radial direction, the at least one lobe moving relative to the meshing component; wherein the electric gear shift motor is mechanically coupled to the cam and thereby move the meshing component between the engaged and disengaged positions.

The present inventor has become appreciative of shortcomings of gear shift mechanisms for vehicles having electromagnetic actuators. It is therefore an object for embodiments of the present invention to provide an improved multi-speed transmission, such as for a wheeled vehicle, in which gear shifting is by electromagnetic actuation. It is a further object for embodiments of the present invention to provide a wheeled vehicle comprising an improved multi-speed transmission in which gear shifting is by electromagnetic actuation.

### Summary of Invention

According to a first aspect of the present invention there is provided a transmission comprising:
a rotatable transmission shaft defining a shaft space therein;
a gear mounted coaxially with the transmission shaft for rotation around the transmission shaft;
a meshing component mounted on the transmission shaft for movement in a radial direction between a disengaged position and an engaged position, the meshing component not meshing with the gear when in the disengaged position whereby the gear is rotatable around the transmission shaft, the meshing component meshing with the gear when in the engaged position whereby the gear rotates with the transmission shaft; and
a cam and an electric gear shift motor each mounted in the shaft space and for rotation with and relative to the transmission shaft, the cam having at least one lobe extending therefrom in the radial direction, the at least one lobe moving relative to the meshing component upon rotation of the cam relative to the transmission shaft,
wherein the electric gear shift motor is mechanically coupled to the cam whereby operation of the electric gear shift motor rotates the cam relative to the transmission shaft to cause the at least one lobe to bear against the meshing component and thereby move the meshing component between the disengaged and engaged positions.

The meshing component may be biased to one of the positions. For example, the cam may move the meshing component against the bias. The meshing component may be biased to one of the disengaged or engaged positions and the cam may move the meshing component to the other of the engaged or disengaged position against said bias. This may provide an arrangement in which the meshing component is normally engaged or normally disengaged. A return spring may be provided to bias the meshing component. The provision of a biased meshing component may, advantageously, allow the transmission to engage two gears in parallel without causing an over-constraint of the transmission (which may cause the transmission to temporarily lock-up). For example, spring-biased meshing components may act as an over-running clutch. As such, when two gears are selected in parallel the faster of the two selected gears transmits drive and the other gear can enters an over-running state. Such an arrangement can provide smoother gear changes since shifts may overlap.

The multi-speed transmission comprises a rotatable transmission shaft defining a shaft space therein. The transmission shaft may, for example, form part of an electric bicycle and be driven by a drive motor of the electric bicycle. The multi-speed transmission also comprises a gear and a meshing component. The gear is mounted coaxially with the transmission shaft for rotation around the transmission shaft. The meshing component is mounted on the transmission shaft for movement in a radial direction between a disengaged position and an engaged position. The meshing component does not mesh with the gear when in the disengaged position whereby the gear is rotatable around the transmission shaft. The meshing component meshes with the gear when in the engaged position whereby the gear rotates with the transmission shaft. The gear is thus engaged by the meshing component to couple torque between the transmission shaft and the gear as part of gear shifting performed by way of the multi-speed transmission.

The multi-speed transmission further comprises a cam and an electric gear shift motor. Each of the cam and the electric gear shift motor is mounted in the shaft space and for rotation with and relative to the transmission shaft. The cam has at least one lobe extending therefrom in the radial direction. The at least one lobe moves relative to the meshing component upon rotation of the cam relative to the transmission shaft. The at least one lobe may describe a circular path upon rotation of the cam relative to the transmission shaft whereby the at least one lobe moves relative to the meshing component. The electric gear shift motor is mechanically coupled to the cam whereby operation of the electric gear shift motor rotates the cam relative to the transmission shaft. Rotation of the cam relative to the transmission shaft moves the at least one lobe relative to the meshing component to cause the at least one lobe to bear against the meshing component. Bearing of the at least one lobe against the meshing component moves the meshing component between the disengaged and engaged positions.

A multi-speed transmission according to embodiments of the invention is more compact than known multi-speed transmissions in which gear shifting is by electromagnetic actuation. The location of the cam and, in particular, the electric gear shift motor inside the shaft space defined by the transmission shaft may provide a multi-speed transmission which occupies less space in the axial direction of the transmission shaft. Such space saving may be advantageous in two-wheeled vehicles, such bicycles and electric bicycles.

The shaft space defined by the transmission shaft may be cylindrical and more specifically right cylindrical. The cam and an electric gear shift motor may each be received in the cylindrical shaft space and may rotate with the transmission shaft and relative to the transmission shaft when in the cylindrical shaft space.

The gear is mounted coaxially with the transmission shaft for rotation around the transmission shaft. A part of the transmission shaft over which the gear is mounted may define a circular exterior surface over which the gear rotates.

The meshing component is mounted on the transmission shaft for movement in a radial direction between a disengaged position and an engaged position. The meshing component may be mounted at an exterior surface of the transmission shaft. In the disengaged position, the meshing component may extend no further than the exterior surface. In the engaged position, the meshing component may extend beyond the exterior surface to an extent sufficient for the meshing component to mesh with the gear. Torque is therefore coupled between the gear and the transmission shaft when in the engaged position whereby the gear and the transmission shaft turn with each other. The gear may define a set of first teeth on an interior circumference thereof facing the exterior surface of the transmission shaft. The meshing component may define at least one second tooth which meshes with the first teeth defined on the interior circumference of the gear. The at least one second tooth of the meshing component and the set of first teeth of the gear thus constitute a splined interface.

The meshing component may be mounted at the exterior surface of the transmission shaft for rotation on the transmission shaft. When the meshing component is rotated in a first direction, at least one second tooth of the meshing component may not extend beyond the exterior surface of the transmission shaft or may extend beyond the exterior surface of the transmission shaft to an extent insufficient to mesh with the gear. When the meshing component is rotated in a second direction opposite the first direction, at least one second tooth of the meshing component may extend beyond the exterior surface of the transmission shaft to an extent sufficient to mesh with the gear.

The meshing component may be a member which is hingedly mounted on the transmission shaft. The at least one second tooth may be spaced apart along the meshing component from an axis of rotation of the meshing component.

The meshing component rotates on the transmission shaft about an axis substantially parallel to an axis of rotation of the transmission shaft.

The cam has at least one lobe extending therefrom in the radial direction. The at least one lobe may extend from an exterior surface of the cam. The cam may be cylindrical and the at least one lobe may extend circumferentially around the cam. Therefore, when the cam rotates relative to the transmission shaft the at least one lobe moves circumferentially relative to the meshing component. Circumferential movement of the at least one lobe relative to the meshing component may cause the at least one lobe to bear against the meshing component to cause it to move between the engaged and disengaged positions. Where the meshing component is mounted at the exterior surface of the transmission shaft for rotation on the transmission shaft, the at least one lobe bearing against the meshing component rotates the meshing component to move the meshing component between the engaged and disengaged positions.

The cam may have a set of lobes extending therefrom in the radial direction. At least one lobe in the set of lobes may rotate the meshing component to the engaged position and a further lobe of the set of lobes may rotate the meshing component to the disengaged position. The at least one lobe may bear against a first formation on the meshing component and the further lobe may bear against a second formation on the meshing component, the first and second formations being on opposite sides of an axis of rotation of the meshing component.

In some embodiments it may be desirable to have an arrangement in which the cam actively both engages and disengages the meshing component. First and second lobes in the set of lobes may rotate the meshing component to the engaged position, the first and second set of lobes being spaced apart in the axial direction. A third lobe in the set of lobes may rotate the meshing component to the disengaged position, the third lobe being between the first and second lobes in the axial direction with the third lobe being spaced from the first and second lobes in the circumferential direction. The third lobe may overlap in part with first and second lobes despite being spaced from the first and second lobes in the circumferential direction. The first formation on the meshing component may comprises two meshing component lobes which are spaced apart from each other in the axial direction and to an extent sufficient to allow passage of the third lobe therebetween. Each of the two meshing component lobes may be in registration with a respective one of the first and second lobes. The third lobe of the cam may therefore pass between the two meshing component lobes such that the third lobe does not rotate the meshing component as the third lobe moves towards the second formation on the meshing component. Before the third lobe reaches the second formation, the first and second lobes bear against the two meshing component lobes to rotate the meshing component to the engaged position. Upon further rotation of the cam relative to the transmission shaft, the first and second lobes cease to bear against the two meshing component lobes and the third lobe bears against the second formation to rotate the meshing component to the disengaged position.

In other embodiments a return spring may act on one of the first or second formation of the meshing component. The spring may provide a radial force to the first or second formation to bias the meshing component toward the rotated position in which it is either engaged or disengaged. It will be appreciated that which of the formations the bias force is applied to will determine whether the meshing component is normally engaged or normally disengaged. The spring may be a spring ring which extends around the transmission shaft. An end of the spring ring may bear on the formation of the meshing component. As such the spring may be a generally circumferentially extending cantilever flat spring. The spring may be formed as part of a cylinder. The cylinder may include a plurality of spring members at spaced apart circumferential and/or axial positions (for example a plurality of springs for engaging separate meshing components and/or formations of meshing components). As such, the cylinder may have a lattice structure. In other embodiments the cylinder may have a simple, generally solid, tube profile with cut out sections defining the spring members. The spring may for example be formed from the cylinder by stamping or cutting the component from a sheet material. For example, the spring may be a sheet metal cylinder. Alternatively, the spring could for example be a composite part such as a fibre reinforced plastic.

Where the transmission includes a spring biasing the meshing component, the at least one lobe of the cam may be arranged to bear on the other of the first or second formation. For example, the at least one lobe may be arranged to bear against the second formation on the meshing component to rotate the meshing component to the disengaged position. The cam may act against the bias of the spring in rotating the meshing component.

The first formation and second formations on the meshing component may be axially misaligned. As such, the spring and/or cam lobes which act on the first and second components are not in registration with one another in the axial direction such that they may freely pass one another during relative rotation of the cam. For example, the meshing component may comprise two meshing component lobes which are spaced apart from each other in the axial direction and the second formation may comprise a further meshing component lobe which is axially between the two meshing component lobes of the first formation.

Where plural meshing components are mounted on and are axially spaced apart from one another along the transmission shaft, the cam may have plural sets of lobes extending therefrom in the radial direction, the plural sets of lobes being axially spaced apart from one another. Each set of lobes of the plural sets of lobes may cooperate with a respective one of the plural axially spaced apart meshing components.

The transmission may for example include a set of meshing components for a gear. The set of meshing components may be spaced around the circumference of the transmission shaft. The at least one lobe may comprise a set of lobes spaced apart around the circumference. For example, the number of lobes in a set may be selected to optimise the gear change sequencing. As such, some gears and meshing components (i.e. at a given axial location) may be provided with only one lobe whilst others may be provided with plural lobes. The provision of multiple meshing components at spaced apart circumferential locations may provide a more reliable engagement between the transmission shaft and gear. For example, a pair of diametrically opposed meshing components may be provided to simultaneously engage a corresponding gear. It will likewise be appreciated that in some embodiments a single meshing component may be sufficient for each gear with the advantage of reduced complexity and/or part count and/or weight.

The electric gear shift motor is mechanically coupled to the cam whereby operation of the electric gear shift motor rotates the cam relative to the transmission shaft. The cam may define a cam space therein. The electric gear shift motor may be received in the cam space. The electric gear shift motor may comprise an armature comprising first motor part and a permanent magnet comprising second motor part, the first and second motor parts rotating relative to each other on operation of the electric gear shift motor. One of the first motor part and the second motor part may surround the other of the first motor part and the second motor part.

One of the first motor part and the second motor part may be mechanically coupled, and more specifically may be fixedly attached, to the cam and the other of the first motor part and the second motor part may be mechanically coupled, and more specifically may be fixedly attached, to the transmission shaft whereby operation of the electric gear shift motor causes relative rotation of the cam and the transmission shaft.

The first motor part may surround the second motor part. The first motor part may be fixedly attached to the cam and the second motor part may be fixedly attached to the transmission shaft.

The gear shift motor typically rotates at a speed too high for rotation of the cam relative to the transmission shaft according to the present purpose. The gear shift motor may therefore comprise a gear shift motor reduction gear which is mechanically coupled to the second motor part to provide for speed reduction. An output of the gear shift motor reduction gear may be mechanically coupled to the transmission shaft whereby operation of the electric gear shift motor causes the gear shift motor reduction gear to rotate the cam relative to the transmission shaft at reduced speed. The second motor part and the gear shift motor reduction gear may be disposed in an axial direction relative to each other in the shaft space.

Electrical power for the gear shift motor is provided from a power source mounted on a vehicle comprising the multi-speed transmission. The power source may, for example, be an electric battery of an electric bicycle. By way of another example, the power source may comprise a dynamo and an accumulator, the dynamo being operated by rotation of a wheel of the vehicle where the vehicle lacks an electric battery. Irrespective of the form of the power source, the power source may be mounted on the vehicle comprising the multi-speed transmission. As described above, the gear shift motor rotates with the transmission shaft. The gear shift motor may therefore rotate relative to the vehicle mounted power source. It may therefore be impractical to convey electrical power from the power source to the gear shift motor by way of wire conductors, such as cables.

In view of the impracticability of conveying electrical power from the power source to the gear shift motor by way of wire conductors, the inventor has devised a solution involving a rotary electrical interface. The multi-speed transmission may therefore further comprise a rotary electrical interface, the rotary electrical interface comprising a first stationary part and a second rotating part. The second rotating part may be mounted for rotation with the gear shift motor and more specifically a first motor part of the gear shift motor. The first stationary part may be mounted for rotation relative to the first motor part of the gear shift motor and for rotation relative to the transmission shaft. The first stationary part may, for example, be mounted on a housing of the multi-speed transmission whereby the first stationary part is immovably mounted on a vehicle comprising the multi-speed transmission. The first stationary part comprises plural first conductive elements and the second rotating part comprises plural second conductive elements, the first stationary part and the second rotating part being disposed relative each other such that each of the first conductive elements bears against and thereby maintains electrical conduction with a respective one of the plural second conductive elements while the second rotating part rotates relative to the first stationary part.

The rotating interface can be used to transfer electrical power to the motor through power circuits, and may also transfer motor control commands and/or data, such as motor speed or position sensor information, through one or more electrical data circuits. Alternatively, the rotary interface may purely transfer electrical power to the motor, with motor control commands and/or data being transferred through a method of wireless communication, for example Bluetooth. This arrangement has the advantage of reducing the number of circuits required on the rotary interface.

The transmission may further comprise a rotary position sensor for detecting the relative rotation of the cam. The position sensor may provide feedback control to the motor. The position sensor may detect when the cam has rotated into a position in which the cam is in a desired alignment. For example, the position sensor may detect a position of the cam which corresponds to a position in which at least one meshing element is engaged and the transmission has accordingly selected a specific gear ratio.

The rotary position sensor may be arranged to detect a plurality of indexed positions of the cam. The rotary position sensor may, for example, comprise one element fixed to the cam and a further element fixed to the transmission shaft such that the position sensor detects the relative position of the elements. For example, one of the transmission shaft or cam may comprise a plurality of circumferentially distributed detection points which move into alignment with a sensor on the other of the cam or transmission shaft when the camshaft is in an engaged orientation. The sensor may for example be a proximity sensor. The detection points may for example be magnets or physical features (for example a plurality of markings facing the sensor or a plurality of axial projections extending toward the sensor). The proximity sensor may for example be a hall effect sensor.

The multi-speed transmission may comprise plural pairs of meshing component and gear, each pair being disposed in an axial direction along the transmission shaft. Each pair of meshing component and gear may be of a form and function as described above with the plural gears being different of themselves and/or in respect of driven gears mounted on another shaft and which are driven by the gears on the transmission shaft to thereby provide plural different gear ratios.

For example, a plurality of gears may be axially spaced from one another along the transmission shaft. The transmission may further comprise a corresponding plurality of sets of meshing components and cam lobes axially spaced from one another along the transmission shaft. Each set of meshing components and cam lobes may cooperate with a respective one of said plurality of gears.

According to a second aspect of the present invention there is provided a vehicle and more specifically a wheeled vehicle comprising a transmission according to the first aspect of the present invention. The wheeled vehicle may, for example, be the like of an automobile, a bus or a truck and, more specifically, a two-wheeled vehicle such as a bicycle, an electric bicycle, a moped or a motorbike. Where the wheeled vehicle is an electric bicycle, the electric bicycle may comprise a drive motor which drives the transmission shaft of the transmission or which drives another shaft which drives the transmission shaft of the transmission. The electric bicycle may comprise an input shaft in parallel to the transmission shaft. The input shaft may comprise a crank shaft rotated by a pair of crank arms, each of which carries a pedal. The transmission may combine input power from the crank shaft and the drive motor and may transmit the combined power to an output. The output may include, for example, one or more of a sprocket, chain belt or drive shaft to provide power to a wheel.

Further features of the second aspect of the present invention may comprise one or more features of the first aspect of the present invention.

### Brief Description of Drawings

Further features and advantages of the present invention will become apparent from the following specific description, which is given by way of example only and with reference to the accompanying drawings, in which:
**Figure 1** is a drawing of drive train for an electric bicycle having a transmission according to an embodiment of the invention and a drive motor;
**Figure 2** is a schematic representation of a transmission for an electric vehicle according to another embodiment of the invention;
**Figure 3** is a further schematic representation of the transmission of Figure 2;
**Figure 4** is a partially exploded detailed view of and around the drive shaft of Figure 2;
**Figure 5A** is a detailed view of the lobes and meshing components of the transmission of Figure 2;
**Figure 5B** is a detailed view of the slip ring arrangement shown in Figure 4;
**Figure 6** partially exploded detailed view of and around the drive shaft of a transmission in accordance with a further embodiment;
**Figure 7** is a detailed view of the lobes and meshing components of the transmission of Figure 6;
**Figure** 8A, is a detailed view of the connection and sensing arrangement of the transmission of Figure 6; and
**Figure 8B****,** is a partially exploded view of the assembly of figure 8A.

### Description of Embodiments

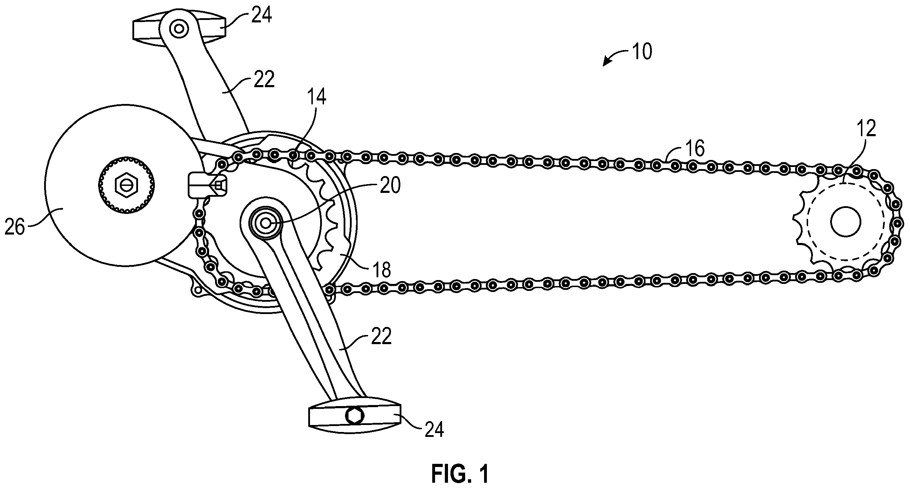

A drawing of a drive train 10 for an electric bicycle having a transmission according to an embodiment of the invention and a drive motor is shown in Figure 1. The drive train 10 comprises a rear sprocket 12 attached to a rear wheel of the electric bicycle, a front sprocket 14 mounted on the transmission and a chain 16 meshing with each of the front and rear sprockets. In accordance with normal bicycle design, rotation of the front sprocket 14 causes rotation of the rear sprocket 12 and thereby rotation of the rear wheel. Although not shown in Figure 1, a spring-loaded idler pulley provides tension to the chain. The transmission 18 is mid-mounted on the bicycle and such that a crank shaft 20 of the bicycle passes through the transmission. In accordance with normal bicycle design, the crank shaft 20 is rotated by crank arms 22 to each of which a pedal 24 is attached. Alternatively or additionally, the front sprocket 14 is rotated by an electric motor 26 which is attached to a housing of the transmission 18. The electric motor 26 is comprised in the drive train 10. An output shaft of the electric motor 26 is mechanically coupled by way of a gear train (not shown) to a shaft of the transmission. Motive force for the bicycle is provided by at least one of rotation of the crank arms 22 by a cyclist and the electric motor 26.

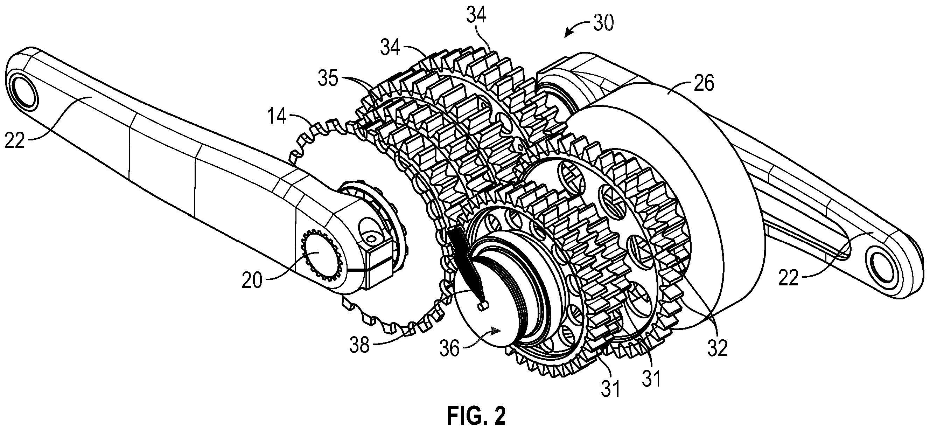

A schematic representation of a transmission for an electric bicycle according to another embodiment of the invention 30 is shown in Figure 2. Components of the transmission of Figure 2 in common with the transmission of Figure 1 are designated by like reference numerals. The reader is directed to description provided above with reference to Figure 1 for description of such components in common. The transmission 30 of Figure 2 has two parallel shafts, i.e. the crank shaft 20 and a drive shaft 36, that are mounted for rotation relative to a housing of the transmission. The drive shaft 36 is an input shaft which is driven by the electric motor 26 of the electric bicycle.

A first set of four spur gears 31 is mounted on the drive shaft 36 with the spur gears 31 of the first set being at spaced apart locations on the drive shaft and individually rotatable about the drive shaft. A second set of two spur gears 32 is mounted on the drive shaft 36 with the spur gears 32 of the second set being at spaced apart locations on the drive shaft and individually rotatable about the drive shaft. The spur gears in each of the first and second sets of spur gears 31, 32 are grouped together with the first and second sets of spur gears 31, 32 spaced apart along the drive shaft 36.

The crank shaft 20 comprises a hollow output shaft and an input shaft within the hollow output shaft whereby the hollow output shaft and the input shaft are concentric. A third set of two spur gears 34 is mounted on the input shaft with the spur gears 34 of the third set being at axially spaced apart locations on the input shaft. Each spur gear 34 of the third set is immovably mounted on the input shaft whereby each spur gear 34 rotates with the input shaft. A fourth set of four spur gears 35 is mounted on the output shaft with the spur gears 35 of the fourth set being at axially spaced apart locations on the output shaft. Each spur gear 35 of the fourth set is immovably mounted on the output shaft whereby each spur gear 35 rotates with the output shaft.

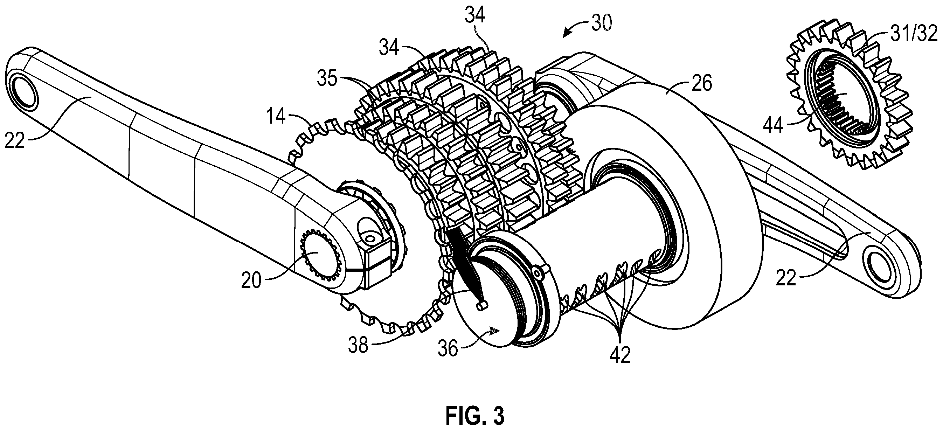

Each gear 31 in the first set meshes with a respective one of the gears 35 in the fourth set. Each gear 32 in the second set meshes with a respective one of the gears 34 in the third set. Rotation of the crank arms 22 rotates the input shaft and hence the third set of gears 34. The transmission according to embodiments of the invention provides for selection of one of the gears 32 in the second set at any one time whereby torque is coupled from the input shaft to the drive shaft 36 by meshing of the selected one of the gears 32 in the second set with the respective one of the gears 34 in the third set. The transmission according to embodiments of the invention also provides for selection of one of the gears 31 in the first set at any one time whereby torque is coupled from the drive shaft 36 to the output shaft by meshing of the selected one of the gears 31 in the first set with the respective one of the gears 35 in the fourth set. Torque is thus coupled from the crank arms 22 to the front sprocket 14 by way of the drive shaft 36 with the gear ratio being controlled by selection of gears on the drive shaft. Rotation of the drive shaft 36 by the electric motor 26 is coupled to the output shaft by selection of one of the gears 31 in the first set at any one time whereby torque is coupled from the drive shaft 36 to the output shaft by meshing of the selected one of the gears 31 in the first set with the respective one of the gears 35 in the fourth set. Torque is thus coupled from the electric motor 26 to the front sprocket 14. As can be seen from Figure 2, the gears in the first to fourth sets are of different radii to thereby provide different gear ratios. Selection of gears on the drive shaft 36 is accomplished by way of apparatus, which includes an electric gear shift motor, comprised in the drive shaft 36 (which constitutes a transmission shaft). Selection of gears is described further below with reference to Figures 3 to 5B. Electrical power is required for gear selection. There is therefore conduction of electrical power from a battery comprised in the bicycle to the drive shaft 36 by way of a cable assembly 38.

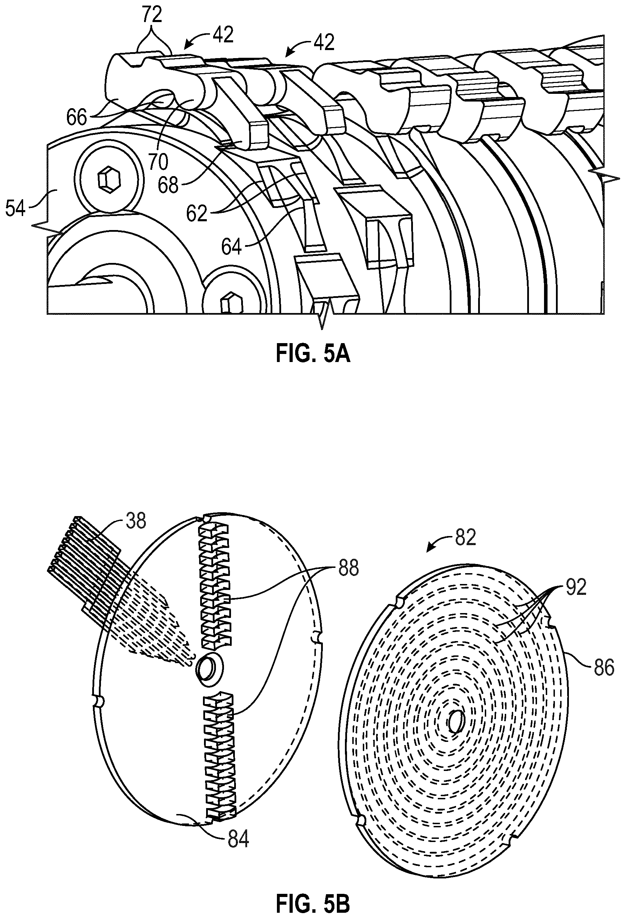

Figure 3 shows the transmission 30 of Figure 2 with the first and second set of gears 31, 32 removed from the drive shaft 36. One gear 31/32 of the removed first and second sets is shown towards the top right of Figure 3. Components in Figure 3 in common with components in Figure 2 are designated with like reference numerals. The reader's attention is directed to description provided above with reference to Figure 2 for description of such components in common. As can be seen from Figure 3, the drive shaft 36 (which constitutes a transmission shaft) is generally cylindrical in outline. Six meshing components 42 are mounted at the exterior surface of the drive shaft. As will become clearer from the description provided below with reference to Figure 5A, each meshing component 42 is mounted on the drive shaft for rotation relative to the drive shaft and about an axis parallel to the axis of rotation of the drive shaft whereby the meshing component is movable between an engaged position in which part of the meshing component extends beyond the exterior surface of the drive shaft and a disengaged position in which no part of the meshing component extends beyond the exterior surface of the drive shaft. The part of the meshing component that extends beyond the exterior surface of the drive shaft when in the engaged position defines two teeth which mesh with the gear teeth 44 defined on an interior circumference of a respective one of the gears 31/32 in the first or second set of gears. Movement of a meshing component 42 to the engaged position therefore locks the respective gear 31, 32 for rotation with the drive shaft 36. Each gear 31, 32 in each of the first and second sets of gears may thus be selected and locked for rotation with the drive shaft 36 by movement of a respective one of the meshing components 42.

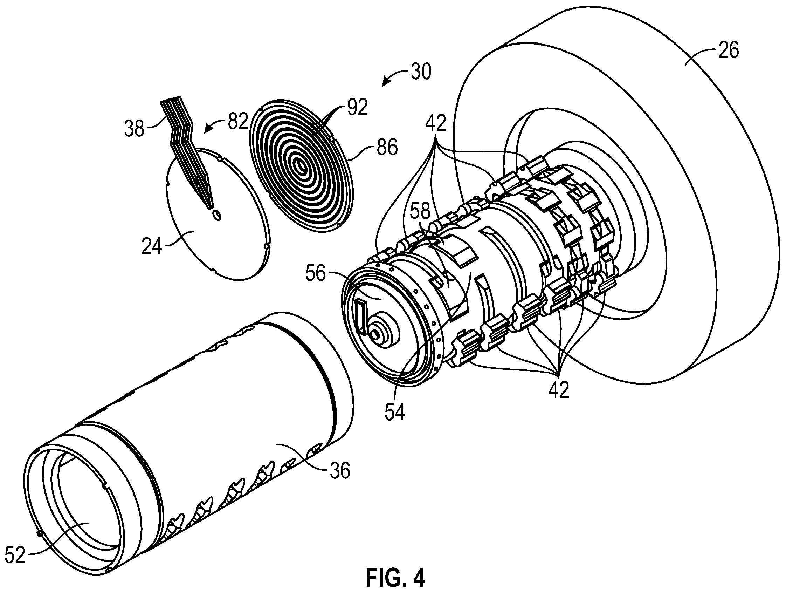

Figure 4 is a partially exploded detailed view of and around the drive shaft 36 of Figures 2 and 3. Components in Figure 4 in common with components in Figures 2 and 3 are designated with like reference numerals. The reader's attention is directed to description provided above with reference to Figures 2 and 3 for description of such components in common. As can be seen from Figure 4, there are two meshing components 42 for each gear 31, 32 of the first and second sets of gears. The two meshing components 42 for each gear 31, 32 are spaced around the circumference of the drive shaft 36 at 180 degrees to each other to thereby provide for proper locking of a gear 31, 32 to the drive shaft. As can be seen from Figure 4, the drive shaft 36 is a hollow cylinder which defines a shaft space 52 therein. The transmission further comprises a cam 54 which is received in the shaft space 52. Although the meshing components 42 are shown in Figure 4 lying over the cam 54, the meshing components 42 are mounted for rotation on the drive shaft 36 each about an axis parallel to the axis of rotation of the drive shaft. The cam 54 is a hollow cylinder defining a cam space in which an electric gear shift motor 56 of the transmission is mounted. The electric gear shift motor 56 is a brushless DC motor in which the stator (which constitutes the first motor part) comprises the armature with the stator surrounding the rotor (which constitutes the second motor part) whereby the rotor and the stator are rotatable relative to each other.

The rotor of the electric gear shift motor 56 is mechanically coupled to a gear shift motor reduction gear. The gear shift motor reduction gear may for example be a multistage gear with a relatively high reduction ratio. The gear shift motor reduction gear is received in the cam space, with the electric gear shift motor 56 and the gear shift motor reduction gear being adjacent to and coaxial with each other. The output from the gear shift motor reduction gear is fixedly attached to the drive shaft 36 such that the electric gear shift motor 56 rotates with the drive shaft through the reduction gearing. The stator of the electric gear shift motor 56 is fixedly attached to the cam 54. Operation of the electric gear shift motor 56 causes relative rotation of the rotor and the stator whereby the cam 54 to which the stator is attached rotates relative to the drive shaft 36 and therefore to the meshing components 42 mounted on the drive shaft.

The cam 54 has plural sets of lobes 58 extending from its exterior surface. The lobes 58 in each set extend circumferentially around the cam. The sets of lobes 58 are spaced apart axially along the cam and such that each set is aligned with a pair of meshing components 42 when the cam 54 is inside the drive shaft 36. Each set of lobes 58 therefore cooperates with a pair of meshing components 42 with the meshing components meshing with a respective one of the gears 31, 32 in the first or second set of gears to select a particular gear ratio. As will become clearer from the description provided below with reference to Figure 5A, first and second lobes of a set of lobes rotates a meshing component 42 to the engaged position and a third lobe of the set of lobes rotates the meshing component to the disengaged position. The sets of lobes 58 are also offset circumferentially in relation to each other whereby differing extents of rotation of the cam 54 operate different pairs of meshing components 42.

A detailed view of the lobes and meshing components of the transmission of Figure 2 is shown in Figure 5A. Each meshing component 42 is elongate and defines a first formation 66 towards one end and a second formation 68 towards another, opposite end. The meshing component 42 is mounted on the drive shaft 36 at its exterior surface for rotation of the meshing component about an axis of rotation 70 located between the first and second formations 66, 68. The first and second formations 66, 68 extend into the shaft space to an extent sufficient that the set of lobes 58, 62, 64 bear against the first and second formations. Considering the set of lobes 58, 62, 64 further, the set of lobes has first and second lobes 62 which are of the same shape and spaced apart in the axial direction such that they are in registration with each other. Each of the first and second lobes defines an upward slope to an apex and a downward slope from the apex. The set of lobes also has a third lobe 64 which is between the first and second lobes 62 in the axial direction with the third lobe being spaced from the first and second lobes in the circumferential direction. The third lobe 64 defines an upward slope to an apex and a downward slope from the apex. The third lobe 64 overlaps in part with the first and second lobes 62 despite being spaced from the first and second lobes in the circumferential direction.

The first formation 66 on the meshing component comprises first and second meshing component lobes which are spaced apart from each other in the axial direction and to an extent sufficient to allow passage of the third lobe 64 therebetween. The second formation 68 on the meshing component has a third meshing component lobe which is in registration with the gap between the first and second meshing component lobes. Each of the first and second meshing component lobes 66 is in registration with a respective one of the first and second lobes 62 and the third meshing component lobe is in registration with the third lobe 64. The third lobe 64 of the cam therefore passes between the first and second meshing component lobes 66 whereby the third lobe does not rotate the meshing component as the third lobe moves towards the second formation 68 on the meshing component. Before the third lobe 64 reaches the second formation 68, the first and second lobes 62 bear against the first and second meshing component lobes 66 to rotate the meshing component to the engaged position. Upon further rotation of the cam relative to the transmission shaft, the first and second lobes 62 cease to bear against the first and second meshing component lobes 66 and the third lobe 64 bears against the third meshing component lobe 68 to rotate the meshing component to the disengaged position.

Each meshing component 42 also defines a pair of circumferentially spaced apart teeth 72 which extend from the end of the meshing component having the first formation 66 but from an opposite side of the meshing component to the first formation. The teeth 72 are therefore directed away from the exterior surface of the cam 54. Rotation of the cam 54 causes circumferential movement of the first and second lobes 62 and the third lobe 64 relative to the meshing component 42. As can be seen from Figure 5A, the first and second lobes 62 bear against the first and second meshing component lobes of the first formation 66 and causes the meshing component 42 to pivot in a clockwise direction whereby the end of the meshing component is moved radially and the teeth 72 extend beyond the exterior surface of the drive shaft 36 and mesh with a gear 31, 32. Upon further anti-clockwise rotation of the cam 54, the first and second lobes 62 stop bearing against the first formation 66 and the third lobe 64 then bears against the second formation 68 at the other end of the meshing component to rotate the meshing component in the anti-clockwise direction. Rotation of the meshing component in the anti-clockwise direction pushes the second formation 68 bearing end of the meshing component up and correspondingly the first formation 66 bearing end down whereby the teeth 72 are positively disengaged from the gear 31, 32.

As mentioned above, conduction of electrical power from a battery comprised in the bicycle to the drive shaft 36 is by way of the cable assembly 38. Rotation of the electric gear shift motor 56 with the drive shaft 36 means the electric gear shift motor rotates relative to the cable assembly. A rotary electrical interface or slip ring arrangement 82 is therefore used to provide electrical conduction between the cable assembly 38 and the electric gear shift motor 56. The rotary electrical interface 82 may be a commercially available slip ring. The rotary electrical interface 82 comprises a first stationary part 84 and a second rotating part 86. The second rotating part 86 is mounted on the drive shaft 36 whereby the second rotating part 86 rotates with the stator, i.e. armature, of the gear shift motor 56. The first stationary part 84 is mounted on a housing of the transmission 30 whereby the first stationary part is immovably mounted on the bicycle. Whilst the illustrated example uses a "pancake" style axial slip ring, radial "drum" style slip rings are also commercially available and could be readily used in alternate embodiments.

As can be seen from Figure 5B, plural first conductive elements 88 protrude from a surface of the first stationary part 84. Plural concentric second conductive elements 92 lie in the plane of a surface of the second rotating part 86. The first stationary part and the second rotating part are disposed relative each other such that each of the first conductive elements 88 bears against and thereby maintains electrical conduction with a respective one of the plural second conductive elements 92 while the second rotating part rotates relative to the first stationary part. Electrical power is thus conveyed from the battery of the bicycle to the electric gear shift motor 56 as the drive shaft 36 rotates.

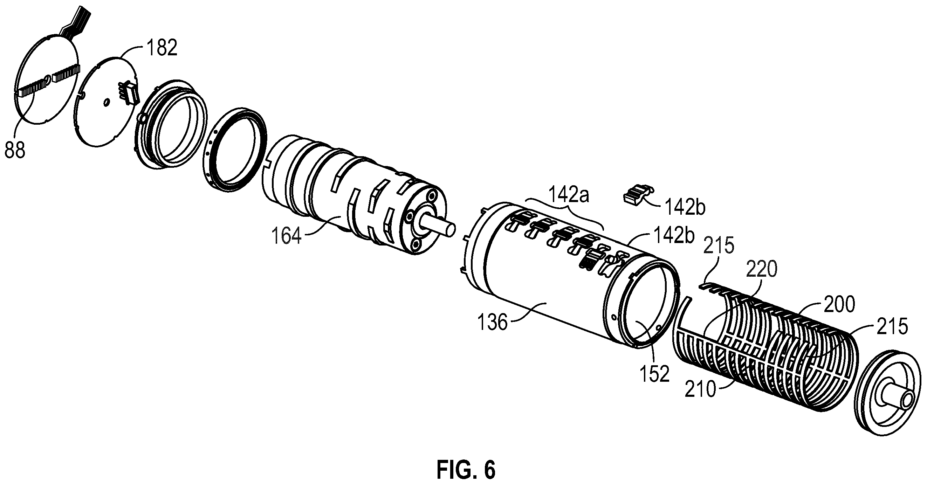

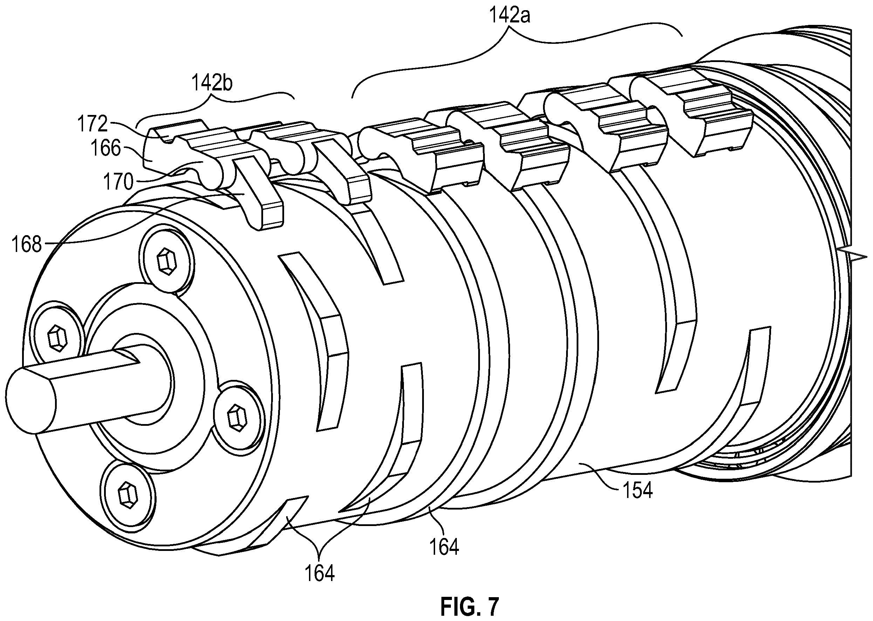

A schematic representation of a transmission for an electric bicycle according to another embodiment of the invention 130 is shown in Figures 6 to 8. Components of the transmission of Figure 6 to 8 in common with the transmission of the above described embodiments are designated by like reference numerals with a prefix of 1. The reader is directed to description provided above with reference to Figure 1 to 5 for description of such components in common.

As best seen in the exploded view of figure 6 this embodiment includes an additional component in the form of the spring cylinder 200 disposed radially between the drive shaft 136 and cam 154. The spring cylinder 200 is formed as a lattice structure, for example from stamped sheet metal and includes plural generally circumferentially extending bands 210 connected by axially extending ribs 220. The bands 210 end in cantilever circumferentially extending springs 215. Circumferentially adjacent to the springs 215 a circumferential void is defined in the spring cylinder 200 to provide a clearance space for the meshing components 142. The ends of the springs 215 the underside of the meshing components 142 to provide a radially outwardly directed spring force to the meshing component. It may be noted that in the illustrated example the springs 215 are arranged in pairs which are axially spaced apart so as to correspond to the first and second meshing component lobes of the first formation 166 on the meshing component 142. Thus, the springs 215 act on the first formation 166 side of the axis of rotation 170 of the meshing component 142 and bias the meshing component 142 toward its engaged position. The bias holds the first formation end 166 radially outwardly such that the teeth 172 are engaged with the gear 31/32 (omitted for clarity in figure 6).

As a result of the provision of spring biased meshing components 142, the cam 154 of this embodiment may have a simplified configuration in comparison to the earlier embodiment. Specifically, as the meshing components 142 are biased to their engaged position the cam 154 does not require lobes which bear upon the first formation 166. As such the cam 154 is only provided with lobes 164 which are in register with, and bear upon, the second formation 168 of the meshing component 142. The lobes 164 bears against the second formation 168 at the end of the meshing component 142 to rotate the meshing component about its axis of rotation 170 and against the bias of the springs 215. Rotation of the meshing component 142 pushes the second formation 168 bearing end of the meshing component up and correspondingly the first formation 166 bearing end down against the bias of the springs 215 whereby the teeth 172 are disengaged from the gear 31/32.

For completeness it may be noted that the direction of torque transfer between the gear and shaft depends upon the stage of the transmission (i.e. whether the gears are part of the first or second set of gears 31 or 32). Accordingly, the meshing components 142a for engaging the first set of spur gears 31 are mounted on the drive shaft 36 in a first orientation and the meshing components 142b for engaging the second set of spur gears 32 are mounted in a reversed orientation. The operation of the meshing components is essentially identical but the direction of rotation of the meshing components about their axis of rotation 170 is reversed since the first formation end 166 and second formation end 168 are reversed. To provide a "normally engaged" configuration the spring bias acts upon the first formation end 166 and the cam meshes with the second formation end 168 regardless of the direction the meshing component 142 is facing.

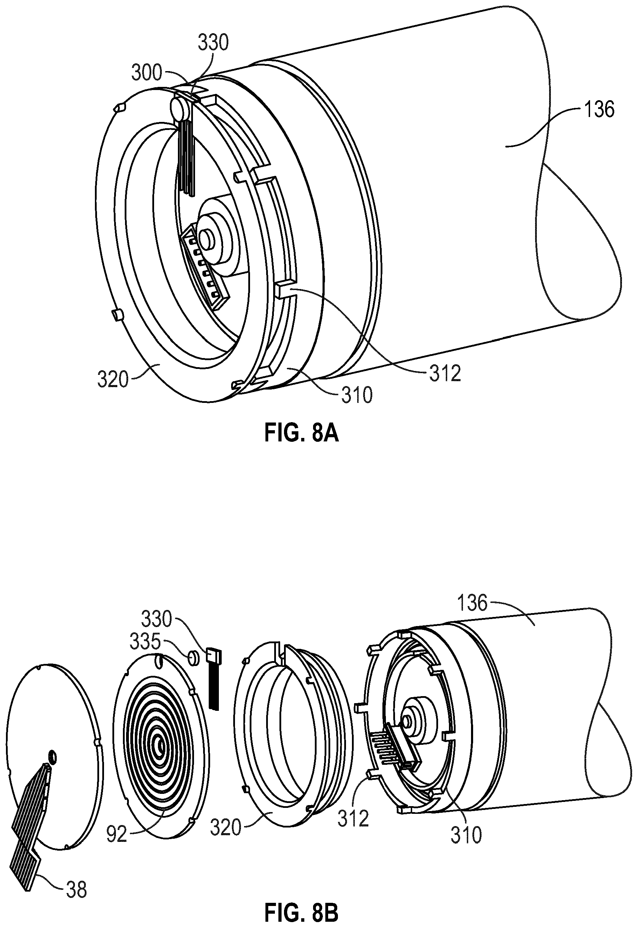

The embodiment of Figures 6 to 8 also includes a sensor arrangement 300 for detecting the rotational position of the cam 154. It should be appreciated that this sensor arrangement could also be utilised in any embodiments of the invention. The sensor arrangement is best seen in the detailed view of Figure 8A and the partially exploded detail of figure 8B. The sensor 300 is conveniently provided in the same sub assembly as the rotary electrical interface or slip ring arrangement 182 (which is described in further detail above). The sensor 300 comprises a castellated collar 310 attached to the end of the transmission shaft 136 for rotation relative to the cam. The collar 310 includes eight axially extending teeth 312 each corresponding to an indexed relative rotational position of the cam 154. For example, each tooth 312 may be aligned with the circumferential alignment in which one (or more) lobes on the cam 154 will bear against a meshing component such that the cam is in an "engaged" position. An annular support member 320 is provided in a spaced apart axial location opposing the collar 310 and includes a mounting recess which holds a detector 330 of the sensor. The annular support member 320 fixes the position of the detector 330 relative to the cam 164. The detector 330 is, for example, be a hall effect proximity sensor and has a bias magnet 335 located axial behind it (with respect to the transmission shaft 136) such that when the teeth 312 of the collar 310 are proximal to the bias magnet 335 a magnetic field will be detected by the detector 330. As the cam 154 is rotated relative to the shaft 136 by the gear shift motor, the teeth 312 rotate into and out of alignment with the detector 330 which detects their proximity. The sensor 300 may, therefore, provide a signal when the cam is in alignment which may be provided as feedback to a controller operating the gear shift motor.

Although the invention has been described above with reference to preferred embodiments, it will be appreciated that various changes or modification may be made without departing from the scope of the invention as defined in the appended claims. For example, whilst the example utilises a hall effect proximity sensor it will be appreciate that other sensors may be used for positional feedback such as an optical sensor or a rotary encoder. Further, whilst the spring cylinder of the embodiment has a lattice body structure this is not essential and for simplicity a solid sheet cylinder could be used with the individual spring members formed by suitable cuts in the sheet metal. On other embodiments individual spring components could be provided to bias each meshing component. In yet further embodiments the bias arrangement could be provided by means other than a spring - for example a magnetic bias. By way of example, an opposing pair of magnetic elements could be provided (such as a first magnet mounted to the meshing component and a corresponding opposed magnet mounted to the camshaft or drive shaft).

Further, it may be noted that the cable assembly 38 includes plural wires and the rotary electrical interface/slip ring arrangement 82 has a corresponding plurality of circuits as defined by number of pairs of conductive elements 88 and 92. For example, the illustrated examples include 8 circuits/wires. The individual connections of the cable assembly may be used for power and control of the gear shift motor 56, for example some connections may be used for control and or data signalling whilst others may provide power. The gear shift motor 56 may include a motor controller mounted integrally with the motor (i.e. a controller which is also within the shaft space). Such an integrated gear shift motor can simplify the inputs needed through the electrical interface 82 since the control logic and closed loop feedback control of the gear shift motor 56 may occur locally to the motor. It may be appreciated that due to spatial constraints on the transmission in general, and the electrical interface in particular, any reduction in the number of conductive elements may enable a more robust connection arrangement to be used. In this regard, in some examples it may be possible to multiplex data signals to reduce the number of connections required.

In order to further simplify the connection arrangement a controller (for example a single-board microcontroller) may be co-located with the gear shift motor 56 in the shaft space which includes wireless communication. For example, a controller could be provided with integral Bluetooth (and in particular "Bluetooth Low Energy"). The use of wireless may enable the electrical interface 82 to be simplified to having only 2 circuits for power with control and data signals carried by wireless. In addition to reducing the physical constraints on the interface wireless may also reduce the risk of electrical noise at the interface 82 interfering with control systems (particularly when the interface has become worn). It will also be appreciated that the use of wireless signalling for gear changing in vehicles such as bicycles is in itself considered advantageous due for example, to the reduction in wiring/cabling around the vehicle and the minimisation of potential points of water/dirt ingress at cable entry points.

## Claims

1. A transmission (18, 30) comprising:
a rotatable transmission shaft (36) defining a shaft space (52) therein;
a gear (31, 32) mounted coaxially with the transmission shaft (36) for rotation around the transmission shaft (36);
a meshing component (42) mounted on the transmission shaft (36) for movement in a radial direction between a disengaged position and an engaged position, the meshing component (42) not meshing with the gear (31, 32) when in the disengaged position whereby the gear (31, 32) is rotatable around the transmission shaft (36), the meshing component (42) meshing with the gear when in the engaged position whereby the gear (31, 32) rotates with the transmission shaft (36); wherein
a cam (54) and an electric gear shift motor (56) each mounted in the shaft space (52) and for rotation with and relative to the transmission shaft (36), the cam (54) having at least one lobe (58, 62, 64) extending therefrom in the radial direction, the at least one lobe (58, 62, 64) moving relative to the meshing component (42) upon rotation of the cam (54) relative to the transmission shaft (36),
wherein the electric gear shift motor (56) is mechanically coupled to the cam (54) whereby operation of the electric gear shift motor (56) rotates the cam (54) relative to the transmission shaft (36) to cause the at least one lobe (58, 62, 64) to bear against the meshing component (42) and thereby move the meshing component (42) between the engaged and disengaged positions.

2. A transmission (18, 30) as claimed in claim 1, wherein the meshing component (42) is biased to one of the disengaged or engaged positions and wherein the cam (54) moves the meshing component (42) to the other of the engaged or disengaged positions against said bias and, wherein the cam (54) is cylindrical and the at least one lobe (58, 62, 64) extends circumferentially around the cam (54) such that when the cam (54) rotates relative to the transmission shaft (36) the at least one lobe (58, 62, 64) moves circumferentially relative to the meshing component (42)and, wherein the meshing component (42) is mounted at an exterior surface of the transmission shaft (36) and wherein in the engaged position, the meshing component (42) extends beyond the exterior surface to an extent sufficient for the meshing component (42) to mesh with the gear.

3. A transmission (18, 30) as claimed in claim 2, wherein the gear defines a set of first teeth on an interior circumference thereof, the teeth facing the exterior surface of the transmission shaft (36), and wherein the meshing component (42) meshes with the first teeth defined on the interior circumference of the gear.

4. A transmission (18, 30) as claimed in claim 3, wherein the meshing component (42) comprises a member hingedly mounted on the transmission shaft (36) and comprises at least one second tooth which meshes with the first teeth defined on the interior circumference of the gear, the at least one second tooth being spaced apart along the meshing component (42) from an axis of rotation of the meshing component (42) such that:
when the meshing component (42) is rotated in a first direction, the at least one second tooth of the meshing component (42) does not extend beyond the exterior surface of the transmission shaft (36) to an extent sufficient to mesh with the gear; and
when the meshing component (42) is rotated in a second direction opposite the first direction, at least one second tooth of the meshing component (42) extend beyond the exterior surface of the transmission shaft (36) to an extent sufficient to mesh with the gear and, wherein the meshing component (42) rotates on the transmission shaft (36) about an axis parallel to an axis of rotation of the transmission shaft (36).

5. A transmission (18, 30) as claimed claim 4, wherein a side of the meshing component (42) facing the cam (54) comprises a first (66) and a second (68) formation, the first and second formations being on opposite sides of an axis of rotation of the meshing component (42) and
wherein the at least one lobe (58, 62, 64) of the cam (54) is arranged to bear against the second formation (68) on the meshing component (42) to rotate the meshing component (42) to the disengaged position.

6. A transmission (18, 30) as claimed in claim 5, wherein the cam (54) comprises a set of lobes (58, 62, 64) extending therefrom in the radial direction and wherein at least one lobe (58, 62, 64) in the set of lobes (58, 62, 64) is arranged to bear against the first formation on the meshing component (42) to rotate the meshing component (42) to the engaged position and a further lobe (58, 62, 64) of the set of lobes (58, 62, 64) is arranged to bear against the second formation to rotate the meshing component (42) to the disengaged position.

7. A transmission (18, 30) as claimed in claim 6, wherein the set of lobes (58, 62, 64) comprises first and second lobes (58, 62, 64) arranged to bear against the first formation, the first and second lobes (58, 62, 64) being spaced apart in the axial direction, and the further lobe (58, 62, 64) arranged to bear against the second formation comprises a third lobe (58, 62, 64) between the first and second lobes (58, 62, 64) in the axial direction and spaced from the first and second lobes (58, 62, 64) in the circumferential direction.

8. A transmission (18, 30) as claimed in claim 4 or 5, further comprising a spring (215) arranged to provide a radial force on one of the first and second formations (66, 68).

9. A transmission (18, 30) as claimed in any preceding claim, wherein the electric gear shift motor (56) comprises an armature comprising first motor part and a permanent magnet comprising second motor part and wherein one of the first motor part and the second motor part is mechanically coupled to the cam (54) and the other of the first motor part and the second motor part is mechanically coupled to the transmission shaft (36).

10. A transmission (18, 30) as claimed in any preceding claim, wherein the gear shift motor (56) further comprises a gear shift motor (56) reduction gear.

11. A transmission (18, 30) as claimed in any preceding claim, further comprising a rotary electrical interface (82, 182) for providing power to the gear shift motor (56) from a power source, the rotary electrical interface optionally comprising a first stationary part mounted on a housing of the multi-speed transmission and a second rotating part mounted for rotation with the gear shift motor (56).

12. A transmission (18, 30) as claimed in any preceding claim, further comprising a set of meshing components (42) for a gear, the set of meshing components (42) being spaced around the circumference of the transmission shaft (36), and wherein the at least one lobe (58, 62, 64) comprises a set of lobes (58, 62, 64) spaced apart around the circumference and comprising at least a one lobe (58, 62, 64) for bearing against each meshing component (42).

13. A transmission (18, 30) as claimed in any preceding claim further comprising a plurality of gears axially spaced from one another along the transmission shaft (36) and wherein the transmission further comprises a corresponding plurality of sets of meshing components(42) and cam (54) lobes (58, 62, 64) axially spaced from one another along the transmission shaft (36), each sets of meshing components(42) and cam (54) lobes (58, 62, 64) cooperating with a respective one of said plurality of gears.

14. A transmission (18, 30) as claimed in any preceding claim further comprising a rotary position sensor (300) for detecting the relative rotation of the cam (54) the rotary position sensor (300) may comprise a sensor (330) fixed relative to one of the cam (54) and the transmission shaft (36) and the other of the proximity shaft and the cam (54) may further comprise a plurality of circumferentially distributed index features (312) which move into alignment with the sensor when the cam (54) is in an engaged orientation.

15. A vehicle comprising a transmission (18, 30) as claimed in any preceding claim and a drive motor (56) for driving the transmission shaft (36) of the transmission and optionally further comprising an input shaft (20) in parallel to the transmission shaft (36), and wherein the input shaft (20) comprises a crank shaft rotated by a pair of crank arms (22), each of which carries a pedal (24).

## Patentansprüche

1. Ein Getriebe (18, 30), das Folgendes umfasst:
eine rotierbare Getriebewelle (36), die einen Wellenraum (52) darin definiert,
ein Zahnrad (31, 32), das koaxial mit der Getriebewelle (36) zur Rotation um die Getriebewelle (36) herum montiert ist;
eine Eingriffskomponente (42), die auf der Getriebewelle (36) zur Bewegung in einer Radialrichtung zwischen einer ausgeklinkten Position und einer eingeklinkten Position montiert ist, wobei die Eingriffskomponente (42) mit dem Zahnrad (31, 32) nicht in Eingriff steht, wenn in der ausgeklinkten Position, wobei das Zahnrad (31, 32) um die Getriebewelle (36) herum drehbar ist, wobei die Eingriffskomponente (42) mit dem Zahnrad in Eingriff steht, wenn in der eingeklinkten Position, wobei das Zahnrad (31, 32) mit der Getriebewelle (36) rotiert, wobei
ein Nockenteil (54) und ein elektrischer Gangschaltmotor (56), die jeweils in dem Wellenraum (52) und zur Rotation mit und relativ zu der Getriebewelle (36) montiert sind, wobei das Nockenteil (54) mindestens eine Nase (58, 62, 64) aufweist, die sich von diesem in der Radialrichtung erstreckt, wobei sich die mindestens eine Nase (58, 62, 64) bei Rotation des Nockenteils (54) relativ zu der Getriebewelle (36) relativ zu der Eingriffskomponente (42) bewegt,
wobei der elektrische Gangschaltmotor (56) mit dem Nockenteil (54) mechanisch gekoppelt ist, wobei ein Betrieb des elektrischen Gangschaltmotors (56) das Nockenteil (54) relativ zu der Getriebewelle (36) rotiert, um zu verursachen, dass die mindestens eine Nase (58, 62, 64) gegen die Eingriffskomponente (42) drückt und dadurch die Eingriffskomponente (42) zwischen der eingeklinkten und ausgeklinkten Position bewegt.

2. Ein Getriebe (18, 30) gemäß Anspruch 1, wobei die Eingriffskomponente (42) auf eine der ausgeklinkten oder eingeklinkten Position vorgespannt ist und wobei das Nockenteil (54) die Eingriffskomponente (42) zu der anderen der eingeklinkten oder ausgeklinkten Position gegen die genannte Vorspannung bewegt und wobei das Nockenteil (54) zylindrisch ist und sich die mindestens eine Nase (58, 62, 64) umlaufend um das Nockenteil (54) herum erstreckt, sodass, wenn das Nockenteil (54) relativ zu der Getriebewelle (36) rotiert, sich die mindestens eine Nase (58, 62, 64) umlaufend relativ zu der Eingriffskomponente (42) bewegt, und wobei die Eingriffskomponente (42) auf einer äußeren Oberfläche der Getriebewelle (36) montiert ist und wobei, in der eingeklinkten Position, sich die Eingriffskomponente (42) in einem Maße über die äußere Oberfläche hinaus erstreckt, das ausreichend ist, damit die Eingriffskomponente (42) mit dem Zahnrad in Eingriff kommt.

3. Ein Getriebe (18, 30) gemäß Anspruch 2, wobei das Zahnrad einen Satz erster Zähne auf einem inneren Umfang davon definiert, wobei die Zähne der äußeren Oberfläche der Getriebewelle (36) zugewandt sind und wobei die Eingriffskomponente (42) mit den ersten Zähnen in Eingriff kommt, die auf dem inneren Umfang des Zahnrads definiert sind.

4. Ein Getriebe (18, 30) gemäß Anspruch 3, wobei die Eingriffskomponente (42) ein Glied umfasst, das auf der Getriebewelle (36) gelenkig montiert ist, und mindestens einen zweiten Zahn umfasst, der mit dem ersten Zahn in Eingriff kommt, der auf dem inneren Umfang des Zahnrads definiert ist, wobei der mindestens zweite Zahn entlang der Eingriffskomponente (42) von einer Rotationsachse der Eingriffskomponente (42) beabstandet ist, sodass:
wenn die Eingriffskomponente (42) in einer ersten Richtung rotiert wird, sich der mindestens zweite Zahn der Eingriffskomponente (42) nicht in einem Maße über die äußere Oberfläche der Getriebewelle (36) hinaus erstreckt, das ausreichend ist, um mit dem Zahnrad in Eingriff zu kommen; und
wenn die Eingriffskomponente (42) in einer zweiten Richtung rotiert wird, die der ersten Richtung entgegengesetzt ist, sich mindestens ein zweiter Zahn der Eingriffskomponente (42) in einem Maße über die äußere Oberfläche der Getriebewelle (36) hinaus erstreckt, das ausreichend ist, um mit dem Zahnrad in Eingriff zu kommen, wobei die Eingriffskomponente (42) auf der Getriebewelle (36) um eine Achse parallel zu einer Rotationsachse der Getriebewelle (36) rotiert.

5. Ein Getriebe (18, 30) gemäß Anspruch 4, wobei eine Seite der Eingriffskomponente (42), die dem Nockenteil (54) zugewandt ist, eine erste (66) und eine zweite (68) Formation umfasst, wobei die erste und zweite Formation auf entgegengesetzten Seiten auf einer Rotationsachse der Eingriffskomponente (42) liegen, und
wobei die mindestens eine Nase (58, 62, 64) des Nockenteils (54) angeordnet ist, um gegen die zweite Formation (68) auf der Eingriffskomponente (42) zu drücken, um die Eingriffskomponente (42) zu der ausgeklinkten Position zu rotieren.

6. Ein Getriebe (18, 30) gemäß Anspruch 5, wobei das Nockenteil (54) einen Satz Nasen (58, 62, 64) umfasst, die sich von diesem in der Radialrichtung erstrecken, und wobei mindestens eine Nase (58, 62, 64) in dem Satz Nasen (58, 62, 64) angeordnet ist, um gegen die erste Formation auf der Eingriffskomponente (42) zu drücken, um die Eingriffskomponente (42) zu der eingeklinkten Position zu rotieren, und eine weitere Nase (58, 62, 64) des Satzes Nasen (58, 62, 64) angeordnet ist, um gegen die zweite Formation zu drücken, um die Eingriffskomponente (42) zu der ausgeklinkten Position zu rotieren.

7. Ein Getriebe (18, 30) gemäß Anspruch 6, wobei der Satz Nasen (58, 62, 64) eine erste und zweite Nase (58, 62, 64) umfasst, die angeordnet sind, um gegen die erste Formation zu drücken, wobei die erste und zweite Nase (58, 62, 64) in der Axialrichtung beabstandet sind, und die weitere Nase (58, 62, 64), die angeordnet ist, um gegen die zweite Formation zu drücken, eine dritte Nase (58, 62, 64) zwischen der ersten und zweiten Nase (58, 62, 64) in der Axialrichtung und beabstandet von der ersten und zweiten Nase (58, 62, 64) in der Umfangsrichtung umfasst.

8. Ein Getriebe (18, 30) gemäß Anspruch 4 oder 5, das ferner eine Feder (215) umfasst, die angeordnet ist, um eine Radialkraft auf einer der ersten und zweiten Formation (66, 68) bereitzustellen.

9. Ein Getriebe (18, 30) gemäß einem vorhergehenden Anspruch, wobei der elektrische Gangschaltmotor (56) Folgendes umfasst: einen Anker, umfassend ein erstes Motorteil und einen Permanentmagnet, umfassend ein zweites Motorteil, und wobei eines des ersten Motorteils und des zweiten Motorteils mit dem Nockenteil (54) mechanisch gekoppelt ist und das andere des ersten Motorteils und des zweiten Motorteils mit der Getriebewelle (36) mechanisch gekoppelt ist.

10. Ein Getriebe (18, 30) gemäß einem vorhergehenden Anspruch, wobei der Gangschaltmotor (56) ferner eine Gangschaltmotor(56)-Untersetzung umfasst.

11. Ein Getriebe (18, 30) gemäß einem vorhergehenden Anspruch, das ferner eine rotierende elektrische Schnittstelle (82, 182) zum Bereitstellen von Strom für den Gangschaltmotor (56) von einer Stromquelle umfasst, wobei die rotierende elektrische Schnittstelle ein erstes stationäres Teil, das auf einem Gehäuse des mehrstufigen Getriebes montiert ist, und ein zweites rotierendes Teil, das zur Rotation mit dem Gangschaltmotor (56) montiert ist, umfasst.

12. Ein Getriebe (18, 30) gemäß einem vorhergehenden Anspruch, das ferner einen Satz Eingriffskomponenten (42) für ein Zahnrad umfasst, wobei der Satz Eingriffskomponenten (42) um den Umfang der Getriebewelle (36) herum beabstandet ist, und wobei die mindestens eine Nase (58, 62, 64) einen Satz Nasen (58, 62, 64), der um den Umfang herum beabstandet ist, und mindestens eine Nase (58, 62, 64) zum Drücken gegen jede Eingriffskomponente (42) umfasst.

13. Ein Getriebe (18, 30) gemäß einem vorhergehenden Anspruch, das ferner eine Vielzahl von Zahnrädern umfasst, die voneinander entlang der Getriebewelle (36) beabstandet sind, und wobei das Getriebe ferner eine entsprechende Vielzahl von Sätzen Eingriffskomponenten (42) und Nockenteil(54)-Nasen (58, 62, 64), die axial voneinander entlang der Getriebewelle (36) beabstandet sind, umfasst, wobei jeder Satz Eingriffskomponenten (42) und Nockenteil(54)-Nasen (58, 62, 64) mit einem jeweiligen der genannten Vielzahl von Zahnrädern zusammenwirken.

14. Ein Getriebe (18, 30) gemäß einem vorhergehenden Anspruch, das ferner einen rotierenden Positionssensor (300) zum Detektieren der relativen Rotation des Nockenteils (54) umfasst, wobei der rotierende Positionssensor (300) einen Sensor (330) umfassen kann, der relativ zu einem des Nockenteils (54) und der Getriebewelle (36) befestigt ist, und der andere der Näherungswelle und des Nockenteils (54) ferner eine Vielzahl von umlaufend verteilten Indexmerkmalen (312) umfasst, die sich in Ausrichtung mit dem Sensor bewegen, wenn das Nockenteil (54) in einer eingeklinkten Orientierung ist.

15. Ein Fahrzeug, umfassend ein Getriebe (18, 30) gemäß einem vorhergehenden Anspruch und einen Antriebsmotor (56) zum Antreiben der Getriebewelle (36) des Getriebes, und optional ferner umfassend eine Eingangswelle (20) parallel zu der Getriebewelle (36), und wobei die Eingangswelle (20) eine Kurbelwelle umfasst, die durch ein Paar Kurbelarme (22) rotiert wird, die jeweils ein Pedal (24) tragen.

## Revendications

1. Transmission (18, 30) comportant :
un arbre de transmission rotatif (36) définissant un espace pour arbre (52) dans celui-ci ;
un engrenage (31, 32) monté de manière coaxiale avec l'arbre de transmission (36) à des fins de rotation autour de l'arbre de transmission (36) ;
un composant d'engrènement (42) monté sur l'arbre de transmission (36) à des fins de mouvement dans une direction radiale entre une position désengrenée et une position engrenée, le composant d'engrènement (42) ne s'engrenant pas avec l'engrenage (31, 32) quand il est dans la position désengrenée ce par quoi l'engrenage (31, 32) est en mesure de tourner autour de l'arbre de transmission (36), le composant d'engrènement (42) s'engrenant avec l'engrenage quand il est dans la position engrenée ce par quoi l'engrenage (31, 32) tourne avec l'arbre de transmission (36) ; dans laquelle
une came (54) et un moteur d'entraînement d'engrenage électrique (56) chacun monté dans l'espace pour arbre (52) et servant à des fins de rotation avec et par rapport à l'arbre de transmission (36), la came (54) ayant au moins un bossage (58, 62, 64) s'étendant en provenance de celle-ci dans la direction radiale, ledit au moins un bossage (58, 62, 64) se déplaçant par rapport au composant d'engrènement (42) dès la rotation de la came (54) par rapport à l'arbre de transmission (36),
dans laquelle le moteur d'entraînement d'engrenage électrique (56) est accouplé mécaniquement à la came (54) ce par quoi le fonctionnement du moteur d'entraînement d'engrenage électrique (56) fait tourner la came (54) par rapport à l'arbre de transmission (36) pour amener ledit au moins un bossage (58, 62, 64) à venir prendre appui contre le composant d'engrènement (42) et pour de ce fait déplacer le composant d'engrènement (42) entre les positions engrenée et désengrenée.

2. Transmission (18, 30) selon la revendication 1, dans laquelle le composant d'engrènement (42) est sollicité jusque sur l'une des positions désengrenée ou engrenée et dans laquelle la came (54) déplace le composant d'engrènement (42) jusque sur l'autre des positions engrenée ou désengrenée contre ladite sollicitation et, dans laquelle la came (54) est cylindrique et ledit au moins un bossage (58, 62, 64) s'étend dans le sens de la circonférence autour de la came (54) de telle sorte que, quand la came (54) tourne par rapport à l'arbre de transmission (36), ledit au moins un bossage (58, 62, 64) se déplace dans le sens de la circonférence par rapport au composant d'engrènement (42) et, dans laquelle le composant d'engrènement (42) est monté au niveau d'une surface extérieure de l'arbre de transmission (36) et dans laquelle, dans la position engrenée, le composant d'engrènement (42) s'étend au-delà de la surface extérieure dans une mesure suffisante pour que le composant d'engrènement (42) s'engrène avec l'engrenage.

3. Transmission (18, 30) selon la revendication 2, dans laquelle l'engrenage définit un jeu de premières dents sur une circonférence intérieure de celui-ci, les dents étant orientées vers la surface extérieure de l'arbre de transmission (36), et dans laquelle le composant d'engrènement (42) s'engrène avec les premières dents définies sur la circonférence intérieure de l'engrenage.

4. Transmission (18, 30) selon la revendication 3, dans laquelle le composant d'engrènement (42) comporte un élément monté de manière articulée sur l'arbre de transmission (36) et comporte au moins une deuxième dent qui s'engrène avec les premières dents définies sur la circonférence intérieure de l'engrenage, ladite au moins une deuxième dent étant espacée le long du composant d'engrènement (42) par rapport à un axe de rotation du composant d'engrènement (42) de telle sorte que :
quand le composant d'engrènement (42) est tourné dans une première direction, ladite au moins une deuxième dent du composant d'engrènement (42) ne s'étend pas au-delà de la surface extérieure de l'arbre de transmission (36) dans une mesure suffisante pour s'engrener avec l'engrenage ; et
quand le composant d'engrènement (42) est tourné dans une deuxième direction opposée à la première direction, au moins une deuxième dent du composant d'engrènement (42) s'étend au-delà de la surface extérieure de l'arbre de transmission (36) dans une mesure suffisante pour s'engrener avec l'engrenage et, dans laquelle le composant d'engrènement (42) tourne sur l'arbre de transmission (36) autour d'un axe parallèle à un axe de rotation de l'arbre de transmission (36).

5. Transmission (18, 30) selon la revendication 4, dans laquelle un côté du composant d'engrènement (42) orienté vers la came (54) comporte une première (66) et une deuxième (68) formations, les première et deuxième formations étant sur des côtés opposés d'un axe de rotation du composant d'engrènement (42) et
dans laquelle ledit au moins un bossage (58, 62, 64) de la came (54) est agencé pour venir prendre appui contre la deuxième formation (68) sur le composant d'engrènement (42) pour faire tourner le composant d'engrènement (42) jusque sur la position désengrenée.

6. Transmission (18, 30) selon la revendication 5, dans laquelle la came (54) comporte un jeu de bossages (58, 62, 64) s'étendant en provenance de celle-ci dans la direction radiale et dans laquelle au moins un bossage (58, 62, 64) dans le jeu de bossages (58, 62, 64) est agencé pour venir prendre appui contre la première formation sur le composant d'engrènement (42) pour faire tourner le composant d'engrènement (42) jusque sur la position engrenée et un autre bossage (58, 62, 64) du jeu de bossages (58, 62, 64) est agencé pour venir prendre appui contre la deuxième formation pour faire tourner le composant d'engrènement (42) jusque sur la position désengrenée.

7. Transmission (18, 30) selon la revendication 6, dans laquelle le jeu de bossages (58, 62, 64) comporte des premier et deuxième bossages (58, 62, 64) agencés pour venir prendre appui contre la première formation, les premier et deuxième bossages (58, 62, 64) étant espacés l'un par rapport à l'autre dans la direction axiale, et l'autre bossage (58, 62, 64) agencé pour venir prendre appui contre la deuxième formation comporte un troisième bossage (58, 62, 64) entre les premier et deuxième bossages (58, 62, 64) dans la direction axiale et espacé par rapport aux premier et deuxième bossages (58, 62, 64) dans la direction allant dans le sens de la circonférence.

8. Transmission (18, 30) selon la revendication 4 ou la revendication 5, comportant par ailleurs un ressort (215) agencé pour fournir une force radiale sur l'une des première et deuxième formations (66, 68).

9. Transmission (18, 30) selon l'une quelconque des revendications précédentes, dans laquelle le moteur d'entraînement d'engrenage électrique (56) comporte un induit comportant une première partie moteur et un aimant permanent comportant une deuxième partie moteur et dans laquelle l'une parmi la première partie moteur et la deuxième partie moteur est accouplée mécaniquement à la came (54) et l'autre parmi la première partie moteur et la deuxième partie moteur est accouplée mécaniquement à l'arbre de transmission (36).

10. Transmission (18, 30) selon l'une quelconque des revendications précédentes, dans laquelle le moteur d'entraînement d'engrenage (56) comporte par ailleurs un engrenage de réduction de moteur d'entraînement d'engrenage (56).

11. Transmission (18, 30) selon l'une quelconque des revendications précédentes, comportant par ailleurs une interface électrique de rotation (82, 182) servant à fournir de la puissance au moteur d'entraînement d'engrenage (56) à partir d'une source d'alimentation, l'interface électrique de rotation comportant éventuellement une première partie fixe montée sur un logement de la transmission à plusieurs vitesses et une deuxième partie rotative montée à des fins de rotation avec le moteur d'entraînement d'engrenage (56).

12. Transmission (18, 30) selon l'une quelconque des revendications précédentes, comportant par ailleurs un jeu de composants d'engrènement (42) pour un engrenage, les composants d'engrènement du jeu de composants d'engrènement (42) étant espacés autour de la circonférence de l'arbre de transmission (36), et dans laquelle ledit au moins un bossage (58, 62, 64) comporte un jeu de bossages (58, 62, 64) qui sont espacés autour de la circonférence et comportant au moins un bossage (58, 62, 64) pour venir prendre appui contre chaque composant d'engrènement (42).

13. Transmission (18, 30) selon l'une quelconque des revendications précédentes, comportant par ailleurs une pluralité d'engrenages qui sont espacés axialement les uns par rapport aux autres le long de l'arbre de transmission (36) et dans laquelle la transmission comporte par ailleurs une pluralité correspondante de jeux de composants d'engrènement (42) et de bossages (58, 62, 64) de came (54) qui sont espacés axialement les uns par rapport aux autres le long de l'arbre de transmission (36), chacun des jeux de composants d'engrènement (42) et de bossages (58, 62, 64) de came (54) coopérant avec un engrenage respectif de ladite pluralité d'engrenages.

14. Transmission (18, 30) selon l'une quelconque des revendications précédentes, comportant par ailleurs un capteur de position rotatif (300) servant à détecter la rotation relative de la came (54), le capteur de position rotatif (300) peut comporter un capteur (330) fixe par rapport à l'un parmi la came (54) et l'arbre de transmission (36) et l'autre parmi l'arbre de proximité et la came (54) peut comporter par ailleurs une pluralité de dispositifs d'indexation répartis dans le sens de la circonférence (312) qui se déplacent à des fins d'alignement sur le capteur quand la came (54) est dans une orientation engrenée.

15. Véhicule comportant une transmission (18, 30) selon l'une quelconque des revendications précédentes et un moteur d'entraînement (56) servant à entraîner l'arbre de transmission (36) de la transmission et comportant éventuellement par ailleurs un arbre d'entrée (20) parallèle à l'arbre de transmission (36), et dans lequel l'arbre d'entrée (20) comporte un vilebrequin mis en rotation par une paire de manivelles (22), dont chacune porte une pédale (24).
